# EUROPEAN PATENT APPLICATION

(11) **EP 1 083 733 A2**
(43) Date of publication of application: **14.03.2001**
(21) Application number: 00307669.2
(22) Date of filing: 05.09.2000
(51) Int. Cl.: H04N 1/00

(54) **Method for managing data to be sent to and received from locally connected facsimile apparatus by E-mail application on PC**

(30) Priority: 07.09.1999 JP 25328199; 09.09.1999 JP 25564099
(71) Applicant: CANON KABUSHIKI KAISHA, Tokyo (JP)
(72) Inventor: Hasegawa, Reiji, Ohta-ku, Tokyo (JP)
(74) Representative: Beresford, Keith Denis Lewis

(57) **Abstract**

To provide a data processor such as a computer connected to an image processor dealing with image data such as a facsimile apparatus, a data processing method in a system having the image processor and the data processor, and a computer readable storage medium for achieving the same. The image data inputted by the image processor can be dealt with as in the case of usual e-mail by the data processor connected to the image processor using an e-mail application. Also, send of e-mail and send facsimile image can be performed by the same e-mail application. Therefore, it is not necessary to learn a lot of operations, and e-mail and facsimile documents can be integrated and managed in a unified way.

## Description

### BACKGROUND OF THE INVENTION

### Field of the Invention

The present invention relates to a data processor such as a personal computer connected to an image processor dealing with image data such as a facsimile apparatus, a data processing method in a data processing system having such an image processor and a data processor, and a computer readable storage medium for implementing the same.

### Related Background Art

Conventionally, a facsimile apparatus that performs send and receive of image data and the like is connected to a personal computer (hereinafter referred to as PC), etc., and image data received by the facsimile apparatus is captured by PC to be displayed and document data edited by the PC is sent by the facsimile apparatus as image data.

In this configuration, on the PC side, an application for controlling the operation of the facsimile apparatus is installed, the image data received by the facsimile apparatus is managed, the image is displayed and so on.

Also, the user using PC has more and more frequently used e-mail due to recent proliferation of network such as Internet.

Conventionally, however, if both the image data which is sent from the facsimile apparatus to the PC and the e-mail which the PC receives are to be treated by the PC, an application for e-mail and an application for managing and displaying the image data from the facsimile apparatus should be already started up, thus increasing the load on PC processing.

Furthermore, it is conceivable that the application in which the process of e-mail and the process of facsimile are integrated is newly developed, but in this case, applications for e-mail that have been used so far become useless and the number of design items are significantly increased as well. Also, in this case, the PC should be equipped with a facsimile modem, a facsimile apparatus comprising special features should be developed, which may increase costs significantly.

Furthermore, when it is needed to send a document to a person who does not have e-mail but have only a facsimile apparatus, problems as described above are risen, and the user who has an e-mail application being resident should install a facsimile dedicated application in addition to the e-mail application and start it, or should print a document created by a document creating application and then make the facsimile apparatus read the document for sending it.

And, unless e-mail and facsimile are integrated using a special application, e-mail and facsimile are utterly independently managed.

### SUMMARY OF THE INVENTION

An object of the present invention is to provide a data processor, a data processing method and a computer readable storage medium eliminating the aforesaid problems.

Furthermore, another object of the present invention is to make it possible to manage image information that is processed on a locally connected facsimile apparatus by a multipurpose application for e-mail.

Furthermore, another object of the present invention is to allow the locally connected facsimile apparatus to send to a remote destination a document created by the application for e-mail.

Furthermore, another object of the present invention is to make it possible to receive the image information received by the locally connected facsimile apparatus from a remote party and provide the same as e-mail format data to the application for e-mail.

The aforesaid objects and other objects of the present invention will be apparent from the following detailed description based on drawings.

### BRIEF DESCRIPTION OF THE DRAWINGS

Fig. 1 is a block diagram illustrating a configuration of a personal computer according to a system in an embodiment of the present invention;
Fig. 2 is a block diagram illustrating a configuration of a facsimile apparatus in the embodiment of the present invention;
Fig. 3 is a diagram illustrating an overview of a system having the personal computer 100 and the facsimile apparatus 200;
Fig. 4 is a diagram illustrating data that is loaded into DRAM 103;
Fig. 5 is a block diagram illustrating an outline of the process according to a first embodiment;
Fig. 6 is a flowchart illustrating a flow of the process of a facsimile reception detecting process task;
Fig. 7 is a flowchart illustrating a flow of the process of a facsimile receiving process task according to the first embodiment;
Fig. 8 is a flowchart illustrating a flow of the process of an upload process task;
Fig. 9 is a flowchart illustrating a flow of the process of a data conversion process task according to the first embodiment;
Fig. 10 is a diagram illustrating a display structure when opening e-mail with a facsimile reception image attached thereto;
Fig. 11 is a block diagram illustrating an outline of the process according to a second embodiment;
Fig. 12 is a flowchart illustrating a flow of the process of the facsimile reception process task according to the second embodiment;
Fig. 13 is a flowchart illustrating a flow of the process of the data conversion process task according to the second embodiment;
Fig. 14 is a diagram illustrating various kinds of tasks achieved by algorithms of a program for a third embodiment;
Fig. 15 is a flowchart illustrating the procedure of an indication task for sending e-mail;
Fig. 16 is a flowchart illustrating the process procedure of an e-mail reception task;
Fig. 17 is a flowchart illustrating the process procedure of an e-mail conversion task; and
Fig. 18 is a flowchart illustrating the process procedure of a facsimile image forwarding task.

### DESCRIPTION OF THE PREFERRED EMBODIMENTS

### (First Embodiment)

In the following, one example of an embodiment of the present invention will be described in detail.

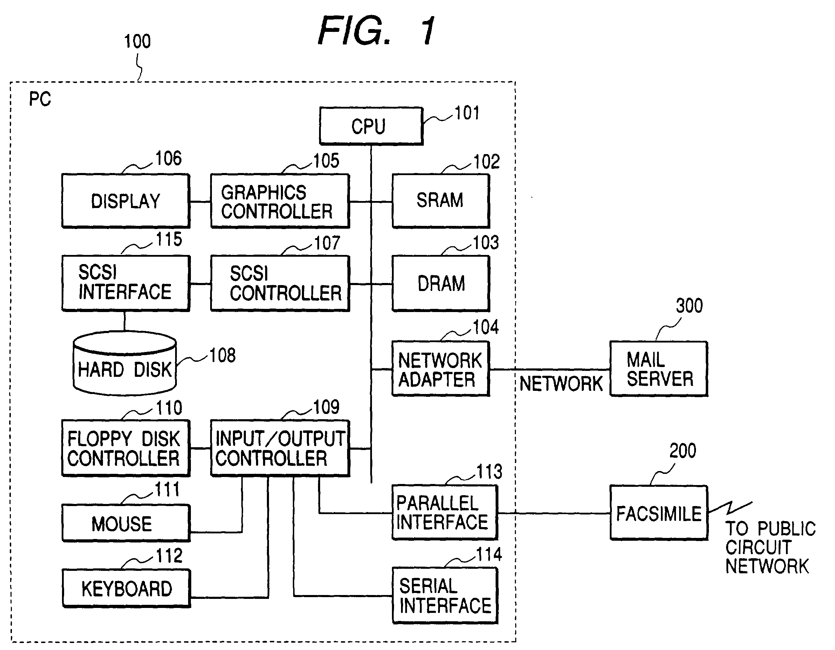

Fig. 1 is a block diagram illustrating an outlined configuration of a personal computer (hereinafter referred to as PC) in a system in which a facsimile apparatus and a PC are locally connected, which is an embodiment of the present invention.

In this figure, a CPU 101 is a system control unit that controls the operation of an entire PC 100. A SRAM 102 is used for storing a cache memory, set data and management data, and so on. A DRAM 103 is used as a main memory for storing various data for load and work of programs and the like.

A network adapter 104 is an adapter for connecting the PC 100 to a predetermined network, through which e-mail is sent and received by means of an existing method. A mail server connected via the network is a terminal having a memory of large capacity and accumulates received e-mails and sends the e-mail to the PC 100 upon request from the PC 100 via the network adapter. The e-mail sent by the PC 100 is also sent to a destination via this mail server 300.

A display 106 displays a variety of information visually, wherein the control of image display is carried out by a graphics controller 105 based on the instruction from the CPU 101.

A hard disk 108 is a nonvolatile memory storing various kinds of drivers, application software and a variety of data and is connected to the CPU 101 via a SCSI (Small Computer System Interface) controller 107. The SCSI controller 107 controls a SCSI interface 115. The SCSI interface 115 is intended to connect devices that performs exchanges using data of SCSI format.

An input/output controller 109 controls various kinds of input/output devices in order to deal with inputs from an operator, information inputted from the outside, information to be outputted to the outside and the like, and through this controller, a floppy disk controller 110, a mouse 111, a keyboard 112, a serial interface 114, a parallel interface 113 and the like are connected to the CPU 101. The floppy disk controller 110 controls the writing data in and reading data from a floppy disk that is an external device. The mouse 111 is used by the operator for performing various kinds of input operations. The keyboard 112 is used by the operator for performing various kinds of input operations using alphabetic, numeric keys and the like. The serial interface 114 is an interface for making a connection with external peripheral devices that carry out exchanges using data of serial form. The parallel interface 113 is an interface for making a connection with external peripheral devices that carry out exchanges using data of parallel form. In this embodiment, a facsimile apparatus 200 is connected via the parallel interface 114.

The facsimile apparatus 200 is connected to a public circuit network such as an existing telephone circuit, and not only operates as a stand-alone facsimile apparatus but also operates in accordance with instructions from the PC 100 based on a facsimile controlling program stored in the hard disk 108.

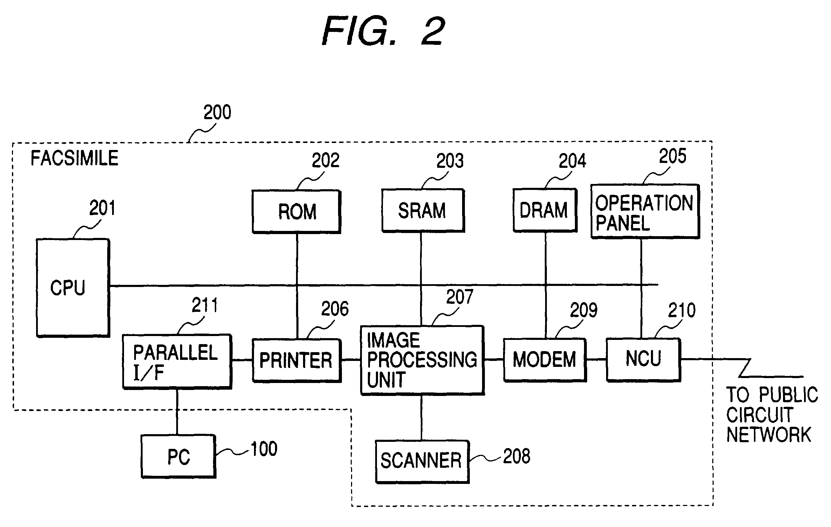

Fig. 2 is a block diagram illustrating an outlined configuration of the facsimile apparatus 200 shown in Fig. 1.

In this figure, the CPU 201 is a system control unit, which controls the entire facsimile apparatus 200. The ROM 202 stores a control program for this system. Furthermore, although the CPU 201 performs various kinds of operations based on the control program stored in the ROM 202, a control program for the CPU 201 like this is not necessarily stored in the ROM 202, but one that is stored in an external storage medium such as a floppy disk and CD-ROM may be captured in a RAM (for example, DRAM 204) in equipment by a dedicated reader, which the CPU 201 then decodes and executes.

Furthermore, the SRAM 203 stores principally management data for send/receive images, directory data, target data and the like, while the DRAM 204 stores principally image data.

An operation panel 205 accepts various kinds of key operations by user. A printer 206 outputs on recording paper a visual image based on inputted image data. An image processing unit 207 gives various kinds of processing to inputted image data. A scanner 208 scans a manuscript to read the image on such a manuscript. A modem 209 modulates and demodulates digital and analog signals for performing facsimile transmission via the public circuit network.

A NCU 210 controls the public circuit network. A parallel interface 211 performs exchange of data between the PC 100 and this facsimile apparatus 200.

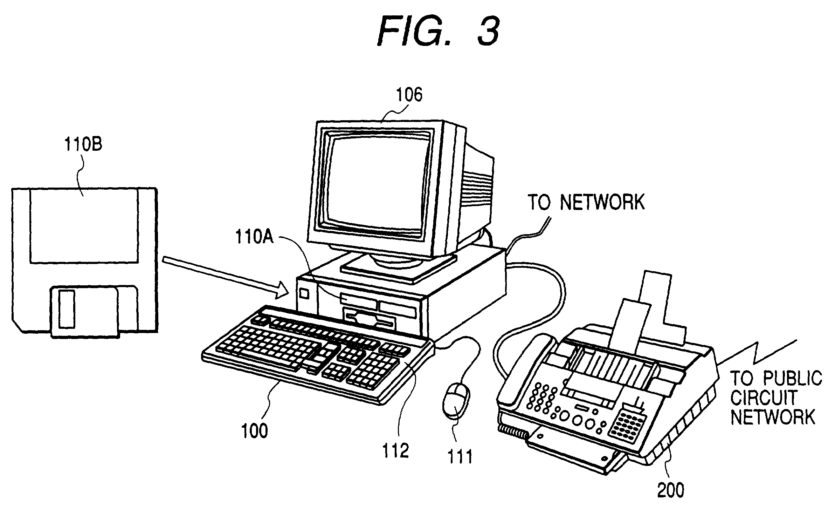

Fig. 3 is a perspective view illustrating an overview of the system in which the PC 100 and the facsimile apparatus 200 are connected, shown in Figs. 1 and 2.

As shown in this figure, the PC 100 may display various kinds of information visually to the operator using the multipurpose display 106, and may input various kinds of instructions using the mouse 111 and the keyboard 112 as well. Furthermore, at least a code that indicates a program for communicating with the facsimile apparatus 200 to send a various kinds of commands to the facsimile apparatus, multipurpose application software for e-mail and the like are stored in the internal hard disk 108 of the PC 100. This program is installed in the hard disk 108 by setting a floppy disk (FD) 110B in a floppy disk driver 110A and providing operations from the keyboard 112, the mouse 111 and the like under the control of the floppy disk controller 110.

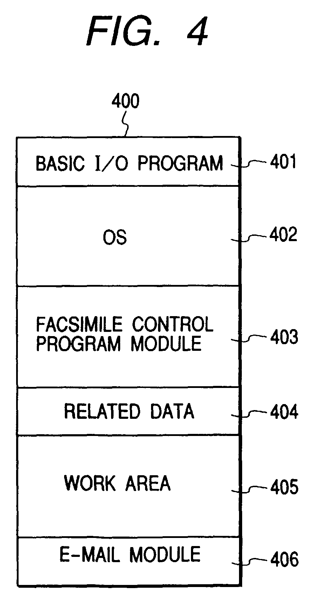

In the DRAM 103 of the PC 100, data as shown in Fig. 4 are stored.

By control of the CPU 101 of the PC 100 based on an OS (operating system) 402 and a basic I/O program 401, a facsimile control program module group 403 and its related data 404 shown in each flowchart described later are read and each program is executed in accordance with directory information. Furthermore, a work area 405 is provided for the work of the CPU 101. Furthermore, an e-mail module 406 is initiated as a multipurpose e-mail application.

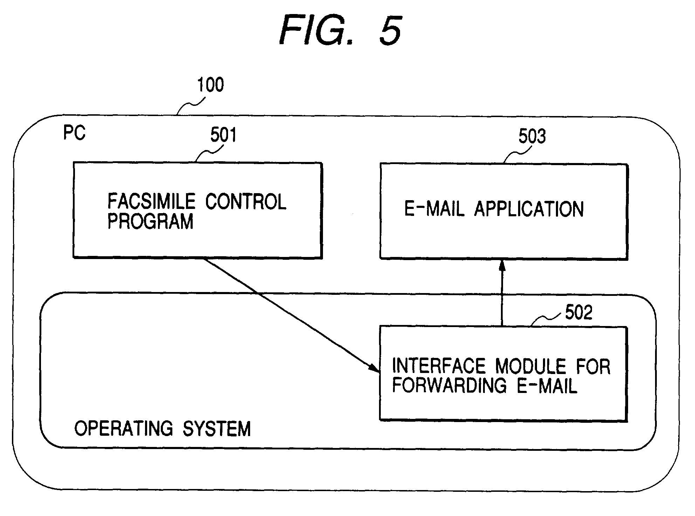

Fig. 5 is a block diagram illustrating an outline of the process at the PC 100 in this embodiment.

A facsimile control program 501 loaded in the DRAM 103 gives instructions to the facsimile apparatus 200 via the parallel interface 113, accepts the image data from the facsimile apparatus 200, forwards this to a multipurpose e-mail application 503 via an interface module for forwarding e-mail 502 included in the OS in the form of attached file of the multipurpose e-mail.

When this e-mail application 503 checks for incoming e-mail, the e-mail application is set to check the mail server 300 for usual e-mail and check at the same time the facsimile control program 501. This setting is manipulated by the operator using the keyboard 112, the mouse 111 and the like, and set in the SRAM 102 based on the control of the CPU 101.

In this way, in the case where instructions to check for presence of incoming e-mail are given from the e-mail application 503, the e-mail forwarding interface module 502 checks the mail server 300 and the facsimile control program 501 for presence of incoming e-mail, and then, when there exists incoming e-mail, it delivers the e-mail to the e-mail application.

In this case, the e-mail application 503 is adapted to check for presence of incoming e-mail via the e-mail forwarding interface module 502, but the e-mail application 503 may also be adapted to check directly the facsimile control program 501 and the server 300, which is dependent on the specification of e-mail.

In the following, the flow of process by the facsimile control program that is installed in the PC 100 will be described using a flowchart. The following flow chart illustrates the flow of the control that the CPU 101 performs based on the facsimile control program stored in the hard disk 108. Furthermore, this program is configured by a plurality of tasks, and each task is linked with one another for performing each process. Furthermore, as described above, these programs include not only those that are installed in the hard disk from the FD but also those stored in advance the ROM and RAM, those that are executed from the FD and CD-ROM, and those that are installed in the hard disk with other methods such as those installed via the network and from the storage medium, and a variety of alterations are possible for their implementing methods.

Also, the facsimile apparatus 200 should send and receive image data in accordance with the existing G3 facsimile procedure.

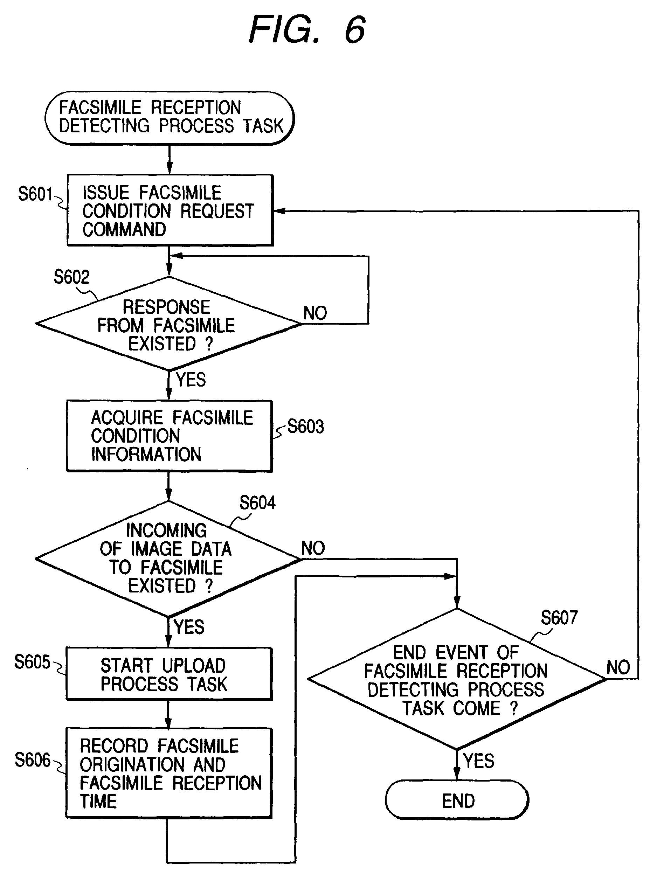

Fig. 6 shows a facsimile reception detecting process task for the PC to detect that the facsimile apparatus 200 has received image data via the public circuit network by the execution of facsimile transmission.

First, in step S601, a facsimile condition request command is issued to the facsimile apparatus 200 for making an inquiry about the condition of the facsimile apparatus 200.

Then, if it is determined that a response has been given from the facsimile apparatus 200 for this command in step S602, facsimile condition information included in this response is obtained in step S603.

Then, in step S604, whether or not image data has been received at the facsimile apparatus 200 by means of facsimile transmission is determined based on this obtained condition information. If so, proceeding to step S605, an upload process task by which the PC 100 captures this received image data is initiated. Furthermore, in this case, registration should be made in the SPAM 203 of the facsimile 200 so as to upload image data received by the facsimile 200 to the PC 100.

Then, in step S606, the origination of the facsimile that the facsimile apparatus 200 has received from the origination by means of facsimile transmission (telephone number by TSI received, name information received by NSS independently, etc.) and the time when the facsimile apparatus 200 received the facsimile are identified and registered in the SRAM 102.

In step S607, if it is determined that the facsimile apparatus 200 has not received image data to be forwarded in step S604 and if it is determined that the process related to facsimile reception has been terminated and an end event indicating the end of the process as the facsimile reception detecting process task has come, processes from S701 are repeated in the case where the end event has not come, and this task is ended in the case where it has arrived.

This facsimile reception detecting process task is executed repeatedly at a predetermined cycle.

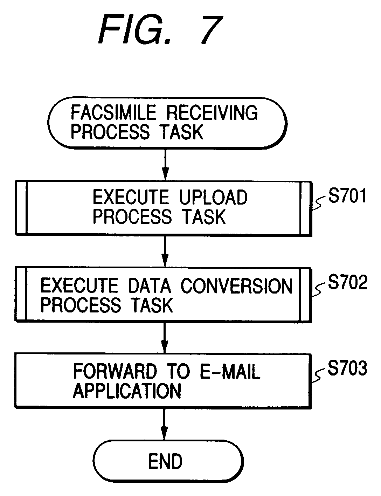

Fig. 7 shows a facsimile receiving process task that is started in response to an upload process task starting instruction from the facsimile reception detecting process task of Fig. 6. This task performs processes for capturing by the PC 100 the image data received by the facsimile apparatus 200 and providing the image data to the e-mail application.

First, in step S701, the upload process task which will be described later is started in response to the upload process task starting instruction from the facsimile reception detecting process task, the image data received by the facsimile apparatus 200 from the origination is uploaded to the PC 100 via the parallel interface 113.

Then, in step S702, a data conversion process task described later is started to convert the image data received by the upload process task into a predetermined data format, and data of e-mail format is created and to this data the previously converted image data is added as an attachment file.

Then, in step S703, the data of e-mail format with an attachment file created by the data conversion process task is forwarded to the e-mail application. In this case, in response to checking of incoming of e-mail, created data of e-mail format is provided if such data exists.

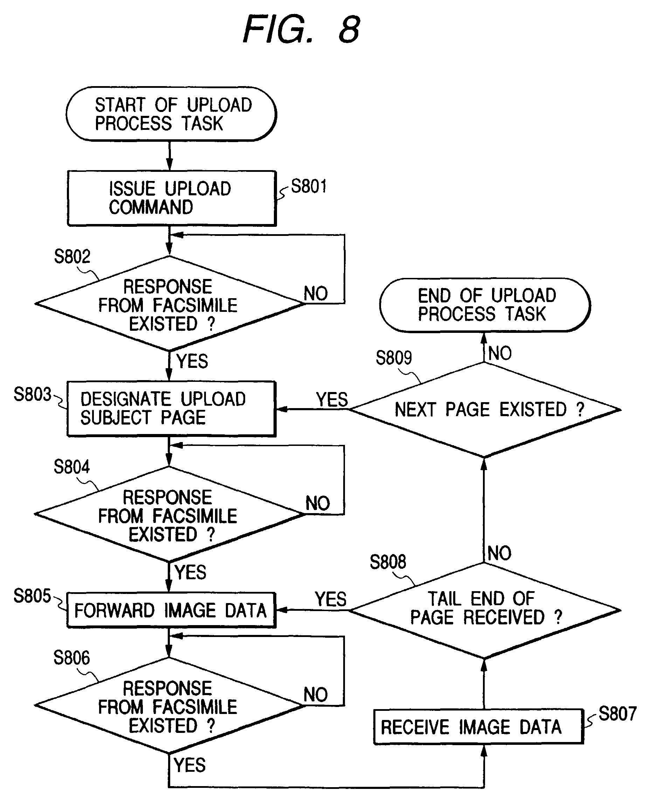

Fig. 8 shows a flow of the process of the upload process task.

First, in step S801, when the incoming of the image data at the facsimile apparatus 200 is detected by the facsimile reception detecting process task, an upload command is issued to the facsimile apparatus 200.

Then, a response to the command from the facsimile apparatus 200 is awaited in step S802, and if a response is given, uploading is possible and a next command can be issued, the command which designates the page number of the upload subject is issued in step S803 (usually, in numbered order starting with page 1).

A response to this command is awaited in step S804, and if the page designating command is accepted and a next command can be issued, the command which requests the image data to be forwarded to the facsimile apparatus 200 in step S805.

A response from the facsimile apparatus 200 is accepted as described above in step S806, and the image data is received by predetermined amount in step S807. Until one page equivalent image is available, or it is determined that the image data has been received so that the tail end of the page can be reached in step S808, the processes of S805 to S807 are repeated and the forwarding of the image data is requested in succession.

When one page equivalent image is available, whether a next page exists is determined, and if there exists a next page in step S809, then the forwarding of the next page is requested (the page number designated at S803 is added by one) and the processes of S803 to S809 are repeated.

If there exists no reception image data in the next page and it is determined that the process is completed so that up to and including the final page, the upload process task is ended.

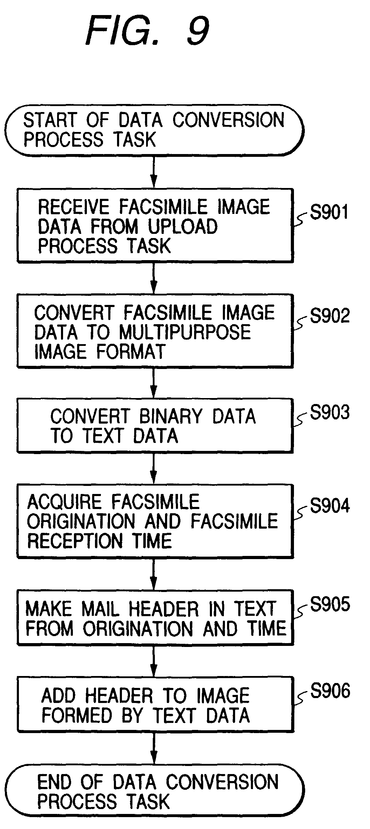

Fig. 9 shows a flow of the process of the data conversion process task.

First, in step S901, the image data uploaded from the facsimile apparatus 200 by the upload process task is received.

Then, in step S902, the format of the received image data is converted to a multipurpose image format. The format of the image data that is received here from the facsimile apparatus 200 is equal to the format when the facsimile apparatus 200 received the image data (it is an encoding format, for example MH and MR, and the image dissolution is equivalent to those defined in the facsimile specification), and image data of this format is converted to a multipurpose image file format. The type of the image data that is obtained here should be set in advance by operator's operation. This operation is set in the SRAM 102 through the control of the CPU 101 using the keyboard 112, the mouse 111 and the like, based on the facsimile control program. S902 performs the conversion of image data referring to this setting. As for image formats, for example, TIFF, JPEG, BMP and the like should be used. Files should be created as multi-page TIFF in case of TIFF, and as different files for each page in case of JPEG and BMP.

Then, in step S903, the binary data obtained by the conversion at S902 is converted to text data, thereby converting the data to the format attached to the e-mail as a file. In step S904, the origination information and reception time recorded at S606 are obtained. Then, in step S905, the origination information received by the facsimile apparatus 200 from the origination is assigned as "originator" of the e-mail. That is, if name information of the origination has been received, the name is assigned, and if it has not been received, the telephone number received with TSI (sending terminal identification signal defined in T.30 of ITU-T) is assigned. Of course, the both may be assigned. The telephone number may be a caller number being sent during calling from the circuit network, instead of the number received with TSI. Furthermore, the name information of the origination is not necessarily to be received from the origination, but the address book used when sending is referred to and the name information is retrieved from the telephone number of the origination, and then the retrieved information may be used. Furthermore, as for "title", the time when the facsimile apparatus 200 receives the image data is used. Also, what makes it possible to identify it as a content received by the facsimile apparatus 200 through facsimile, for example "facsimile reception" may be used. This information such as "originator" and "title" is made a header of e-mail format data, and data of multipurpose e-mail format is created.

Then, in step S906, the image data converted to a text data format at S903 is added to the data created at S905 to make e-mail format data having image data attached thereto.

The e-mail format data obtained as described above can be received by the e-mail application as in the case of usual e-mail when a request for new incoming e-mail from the e-mail application is made at S703, according to a flow as shown in Fig. 5.

At the side of the e-mail application, the content of the image can be identified with a multipurpose image viewing application, by opening the e-mail received in this way and then opening the attached file.

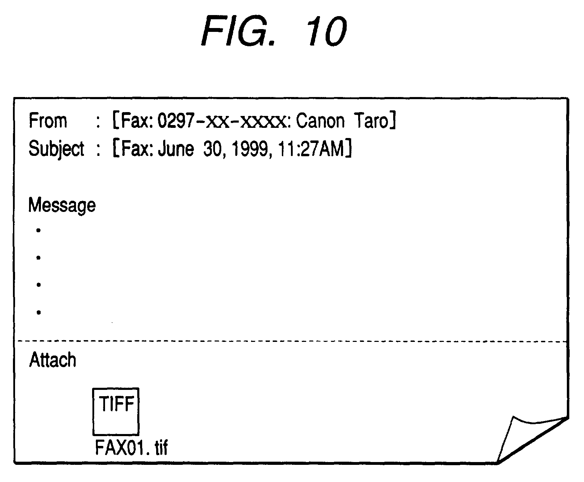

Fig. 10 shows an example of display on the display 106 of the e-mail format data created in this way when it is received by the multipurpose e-mail application and is then opened. By opening an attached file being FAX01.tif, the content of the received image of facsimile can be identified with a predetermined image viewing application. Body copy is usually blank, but a variety of information related to facsimile reception, etc. (such as the number of received pages and resolution) may be entered.

By taking a method like this, the usual e-mail and the facsimile reception image forwarded from the facsimile apparatus 200 can be managed in a unified way, and it is not necessary to start up a dedicated viewer for identifying the facsimile reception image, thus making it possible to reduce the load on the PC 100.

### (Second Embodiment)

In the first embodiment described above, by doing setting at the e-mail application side so that identification of incoming mail is performed also in the facsimile control program, it is received as e-mail through delivery inside the PC at the e-mail application.

In a second embodiment, reception is made possible even if such setting is not done at the e-mail application side.

In the following, the second embodiment will be described.

Since system configuration, etc. is same as the first embodiment and is as shown in Fig. 1 to Fig. 4, description about it is omitted here.

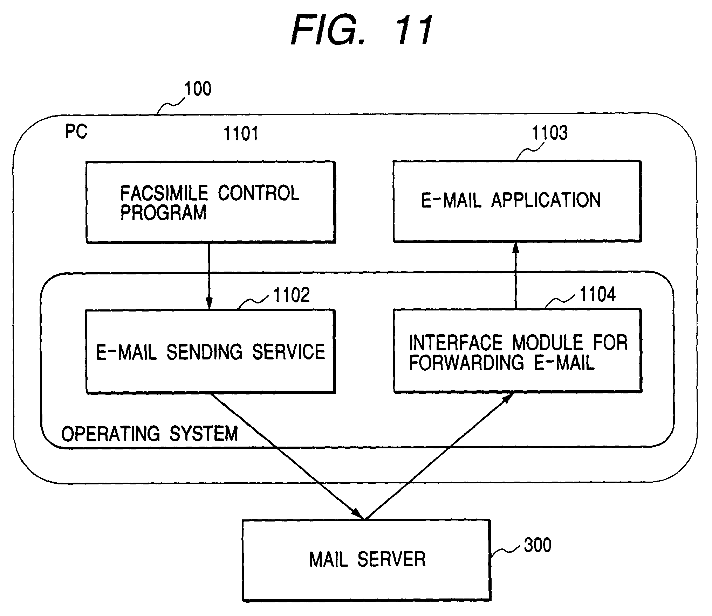

Fig. 11 is a block diagram illustrating an outline of the process at the PC 100 in the second embodiment.

The facsimile control program 1101 loaded into the DRAM 103 gives an instruction to the facsimile apparatus 200 via the parallel interface 113, accepts the image data from the facsimile apparatus 200, and makes this data an attachment file format for multipurpose e-mail and sends e-mail to be destined for the own station to the mail server 300 usually used via an e-mail sending service 1102 included the OS. Then, the e-mail application 1103, just as in the case of usually receiving e-mail, checks incoming of e-mail with the mail server 300 via an e-mail forwarding interface module 1104 to receive the e-mail.

Here, in the case where e-mail is sent and where e-mail is received, these are performed via the e-mail sending service 1102 and the e-mail forwarding interface module 1104, but it is needless to say these may be performed directly without them.

Furthermore, setting should be done so that the own station is made to be a destination when the facsimile control program 1101 sends the reception image data of the facsimile apparatus 200. This setting is operated by the operator using the keyboard 112, the mouse 111 and the like, and is set in the SRAM 102 based on the CPU 101.

In the following, the flow of the process of the facsimile control program according to the second embodiment will be described.

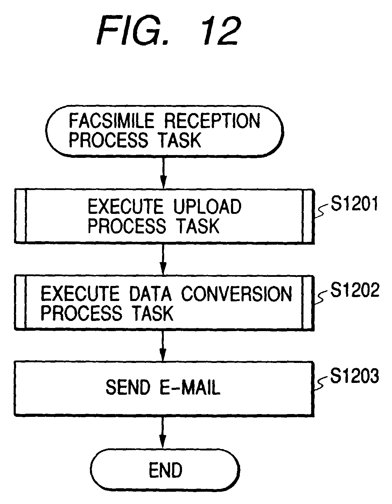

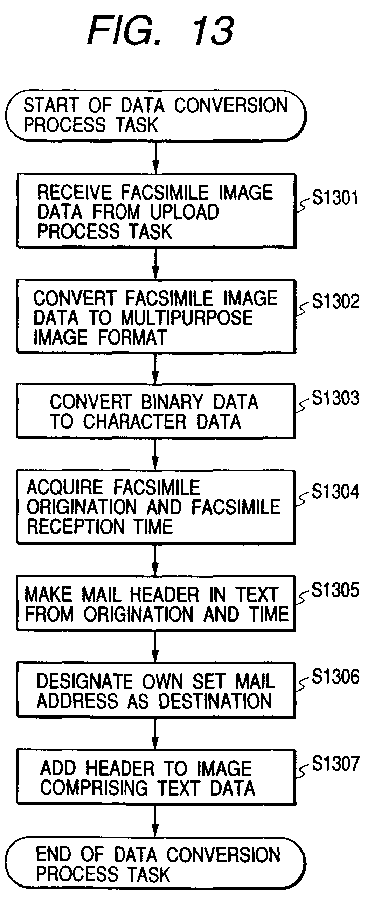

In the second embodiment, the same process as shown in Fig. 6 and Fig. 8 is performed. The data conversion process task is different from that in the first embodiment, and Fig. 12 and Fig. 13 are thus used to describe the flow of the process in the second embodiment.

Fig. 12 is a flowchart illustrating a flow of the process of the facsimile reception process task according to the second embodiment.

In step S1201, the upload process task shown in Fig. 8 is executed as previously described.

Then, in step S1202, the data conversion process in Fig. 13 as described later is executed, and e-mail format data destined for the own station is created with facsimile reception image data attached thereto.

In step S1203, the e-mail format data created in step S1202 is sent via the network adapter 104.

Fig. 13 is a flowchart illustrating a flow of the process of the data conversion process task according to the second embodiment.

In steps S1301 to S1305, the same processes as in the case of S901 to S905 are performed, and they are not described here.

In step S1306, the mail address of the own station set in advance is obtained, and this mail address is set as a destination.

Then, in step S1307, the image data is added to the header created so as to be an attached file format as in the case of S906.

The sending e-mail format data created as described above is sent to and accumulated in the mail server 300 in accordance with the flow shown in Fig. 11. Thereafter, all that is needed is to request the presence of e-mail destined for the own station as in the case of the e-mail application receiving usual e-mail at the mail server 300.

In this way, unified management at the e-mail application is possible even though additional setting is not done as in the case of the first embodiment.

Furthermore, if a hard copy of the facsimile image received by the facsimile apparatus 200 is needed, it is printed with the printer 206 without uploading it to the PC 100 at the facsimile apparatus 200 side, or it is printed after it is uploaded by the PC 100 and is then downloaded according to the instruction from the PC.

Furthermore, image data to be attached to the e-mail may be image data obtained by reading the image on the manuscript with the scanner 208, in addition to the image data received by the facsimile apparatus 200 through facsimile. In this case, a subject and file name indicating the scan image should be used.

### (Third Embodiment)

Next, example will be described when the facsimile apparatus is made to send a send document created with the e-mail application to a remote station.

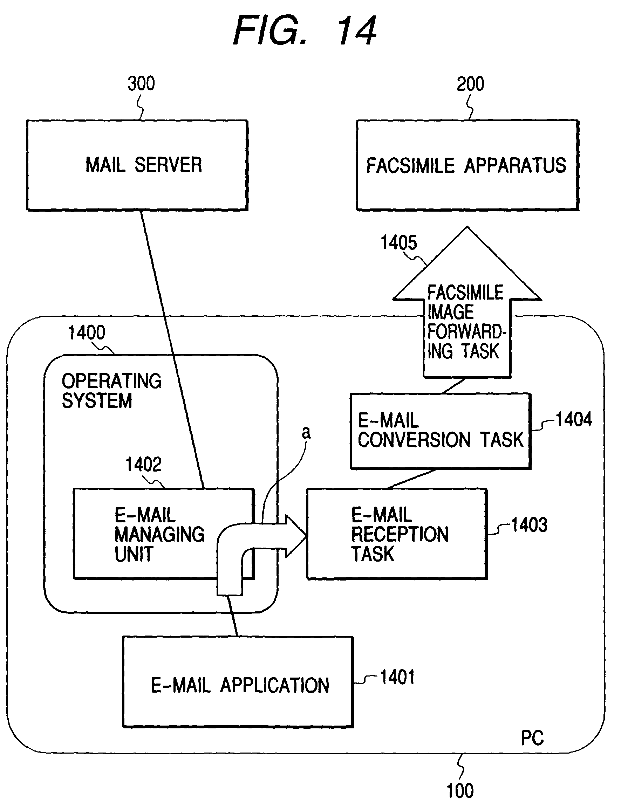

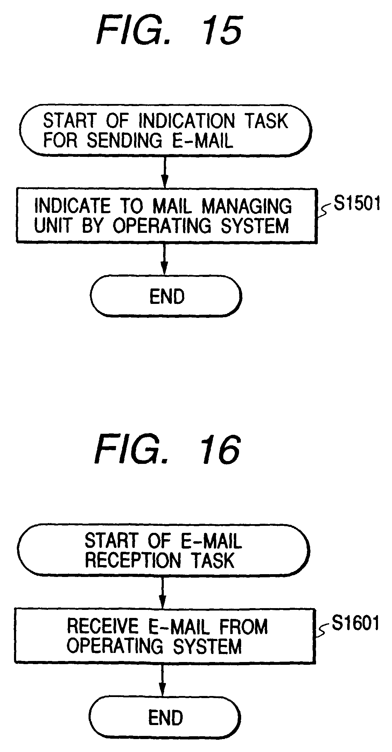

Fig. 14 is a diagram illustrating various kinds of tasks that are achieved by algorithms of applications for a third embodiment. Before each task of an e-mail reception task 1403, an e-mail conversion task 1404 and a facsimile image forwarding task 1405, an indication task for sending e-mail is executed by the e-mail application 1401. Fig. 15 is a flow chart illustrating the process procedure of the indication task for sending e-mail. In the indication task for sending e-mail, when e-mail is sent from the e-mail application 1401, an e-mail managing unit 1402 set by an operating system 1400 forwards the e-mail destined for the locally connected facsimile apparatus 200 not to the mail server 300 but to the e-mail reception task 1403 in the PC 100 (refer to arrow a shown in Fig. 14, step S1501).

That is, a designation is indicated after e-mail is edited by the general (multipurpose) e-mail application 1401, but then the facsimile apparatus is designated as the destination. By this indication, a facsimile sending dialog is opened based on the control of the facsimile control program module 403, and when the telephone number of the destination is indicated, the e-mail managing unit 1402 of the operating system 1400 delivers the e-mail to the e-mail reception task 1403 by the indication task for sending e-mail.

Fig. 16 is a flowchart illustrating the process procedure of the e-mail reception task. In the e-mail reception task 1403, the e-mail created by the e-mail application 1401 is received from the operating system 1400 (step S1601).

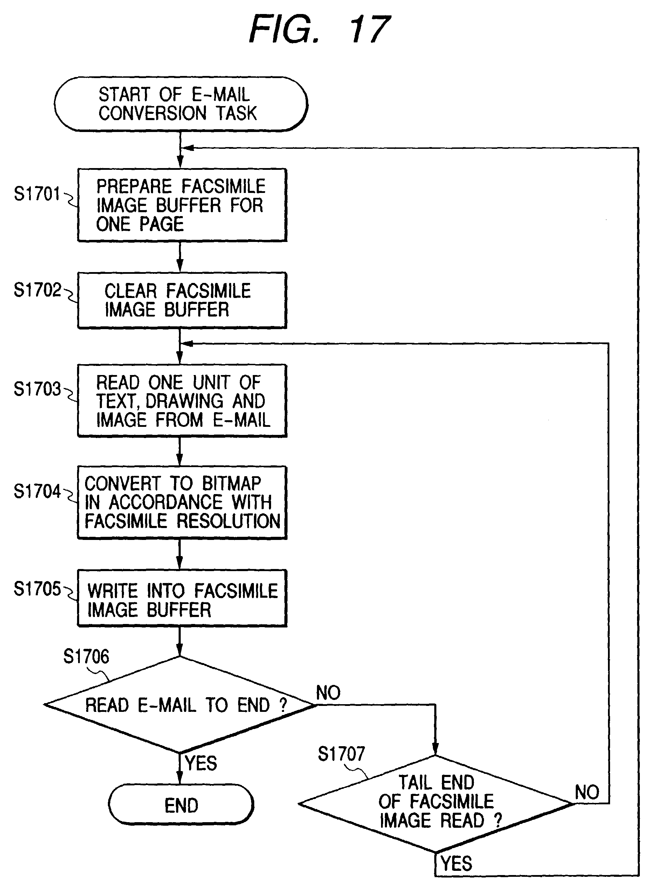

Fig. 17 is a flowchart illustrating the process procedure of the e-mail conversion task. First, a facsimile image buffer for the first page is prepared in the SRAM 2 or DRAM 3 (step S1701), and the buffer is cleared (step S1702). Then, the portion of texts, graphics and images is read by one unit from the e-mail received in the e-mail reception task 1403 (step S1703). It is converted to bit map data corresponding to the resolution for the facsimile (designated by the facsimile sending dialog) (step S1704). The bit map data is written in a predetermined area where the layout of the facsimile image buffer is considered (step S1705).

Whether or not the read portion is the last portion of the e-mail is determined (step S1706), and the e-mail conversion task 1404 is ended if it Is the last portion of the e-mail. On the other hand, if the read portion is not the last portion of the e-mail at the step S1706, whether or not the bit map data written at the step S1705 has reached the tail end of the facsimile image buffer is determined (step S1707). If it has reached the tail end of the facsimile image buffer, returning to the process of step S1701, the facsimile image buffer of the next page is prepared. On the other hand, if it has not yet reached the tail end, returning to the process of step S1703, read of the e-mail is continued. If an attached file is included, it is developed in an appropriate application and is added to the last portion of body copy of the e-mail by determining the kind of a file using an extension.

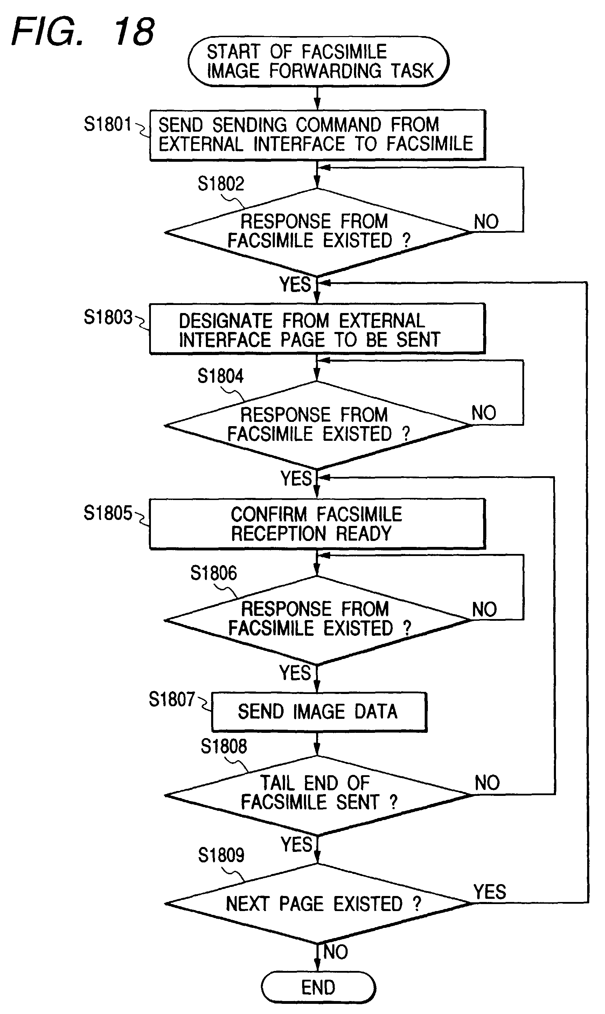

Fig. 18 is a flowchart illustrating the process procedure of the facsimile image forwarding task. In this facsimile image forwarding task 1405, image data is forwarded from the PC 100 to the facsimile apparatus 200. First, a command to send image data (including the telephone number designated by the facsimile sending dialog, in addition to the forwarding request command) is sent from an external interface, namely via the parallel interface 113 to the facsimile apparatus 200 (step S1801). By awaiting a response from the facsimile apparatus 200, whether or not the facsimile apparatus 200 is in the condition that it can receive the command and send a next command is determined (step S1802).

Next, the number of the page to be sent via the parallel interface 113 is designated (step S1803). As in the case of the process of step S1802, a response from the facsimile apparatus 200 is awaited (step S1804). If a response is given from the facsimile apparatus 200, whether preparation for receiving the image data of the facsimile apparatus 200 is already done is checked (step S1805).

Then, a response from the facsimile apparatus 200 is awaited as in the case of the process of step S1802 (step S1806). If a response is given, image data is sent from the PC 100 to the facsimile apparatus 200 (step S1807). Whether this image data has been sent so that the tail end of the page is reached is determined (step S1808).

If the image data has not been sent so that the tail end of the page is reached, returning to the process of step S1805, the preparation for receiving next image data is checked. On the other hand, if it is determined in step S1808 that the image data has been sent so that the tail end of the page is reached, whether or not there exists image data of the next page is determined (step S1809). If there exists image data of next page, returning to the process of step S1803, the designation of the page number of the next page is requested. On the other hand, if it is determined in step S1809 that there does not exist image data of the next page, the process of the facsimile image sending task is ended. The facsimile apparatus 200 receiving this image data calls the telephone number of the indicated destination to perform facsimile transmission via the public circuit network.

As shown above, in the facsimile system of this embodiment, upon sending the e-mail (data) created by the multipurpose e-mail application, when the facsimile service is selected as a destination, the send dialog for facsimile (screen for designating a telephone number) is opened, and when the telephone number is designated therein, the e-mail data received in the PC from the e-mail application is developed in the image for facsimile (facsimile image data) and forwarded to the facsimile apparatus, and the facsimile image is sent to the destination whose telephone number is designated.

Furthermore, in this case, if an attached file is included in the e-mail, an application for developing the attached file by the e-mail conversion task is called, and the attached file is developed and outputted following body copy of the e-mail.

In this way, the e-mail for which facsimile transmission is designated is received from the e-mail application and is converted to facsimile image, and sent to the destination designated as the connected facsimile apparatus, thus making it possible to send as in the case of usual e-mail the e-mail to a destination that does not have a multipurpose e-mail application. That is, an e-mail document that is once created, for which both the mail address and the telephone number are designated as its destination, can be sent to both the e-mail client of the destination through the mail server and the facsimile apparatus, and in addition, sent documents can be managed in a unified way.

Furthermore, send of e-mail and send of facsimile image data are performed by the same e-mail application, thereby eliminating necessities to learn the operation specific to the facsimile application, and enabling the e-mail as sent documents and facsimile documents to be integrated and managed in a unified way.

Furthermore, common documents can be sent at the same time through e-mail and facsimile.

Furthermore, the PC in the aforesaid embodiment has a database consisting of names of destinations, e-mail addresses, telephone numbers of destinations to which data is sent via the facsimile apparatus, and the priority order of e-mail, and the database may be adapted so that it is possible to refer to the database from the application, the operating system and the e-mail conversion task.

Furthermore, in the aforesaid embodiment, programs achieving each task is stored in the hard disk, but instead of storing them in the hard disk in advance, they may be copied on the hard disk from floppy disks, CD-ROMs and the like by installation operations. Furthermore, each task may be achieved by hardware.

Furthermore, if the present invention is achieved by providing a program to a system or apparatus, the system or apparatus can benefit from the effects of the present invention by reading on the system or apparatus a storage medium storing the program represented by the software to achieve the present invention.

As storage media providing program modules, not only hard disks but also for example, floppy disks, optical disks, magneto-optic disks, CD-ROMs, CD-Rs, DVDs, magnetic tapes and nonvolatile memory cards may be used.

Furthermore, it is needless to say that by executing a program code with which the computer is supplied, not only the functions of the aforesaid embodiments are achieved, but also such a program code is included in the embodiments of the present invention even when the program code collaborates with the Os (operating system) operating In the computer or other application software and the like for achieving the functions of the aforesaid embodiments.

Furthermore, it is needless to say that the case is also included in the present invention where after the supplied program code is stored in the memory comprised in a feature expansion board of the computer or a feature expansion unit connected to the computer, the CPU, etc, comprised in the feature expansion board and the feature expansion unit performs part or all of the actual process, and the functions of the aforesaid embodiments are achieved by the process.

As described above, according to this embodiment, the image data inputted by an image processor dealing with image data can be dealt with as in the case of usual e-mail using the e-mail application with a data processor connected to the image processor, and the operability of the system is thus enhanced.

Furthermore, according to this embodiment, send of e-mail and send of facsimile image can be performed by the same e-mail application. Thus, it is not necessary to learn a lot of operations specific to the facsimile application, and e-mail as sent documents and facsimile documents can be integrated and managed in a unified way.

Furthermore, for the e-mail application, it is not necessary to have functions for send/receive through facsimile such as circuit control, and effects as described above can easily be achieved simply by introducing software that governs the interface between the e-mail application and the locally connected facsimile apparatus as explained above.

While the present invention has been described based on its preferred embodiments, the present invention is not limited to these embodiments, and a variety of alterations are possible within the scope show in the claims.

Further, the computer program to carry out the method as hereinabove described can be obtained in electronic form for example by downloading the code over a network such as the internet. Thus in accordance with another aspect of the present invention there is provided an electrical signal carrying processor implementable instructions for controlling a processor to carry out the method as hereinbefore described.

## Claims

1. A data processor, comprising:
connecting means for connecting an image processor dealing with image data;
inputting means for inputting the image data inputted by said image processor via said connecting means;
creating means for creating e-mail format data;
adding means for adding the image data inputted by the said inputting means to the e-mail format data created by said creating means; and
controlling means for controlling an e-mail application to capture the e-mail format data to which the image data is added by said adding means.

2. The data processor according to claim 1, wherein the image processor connected through said connecting means performs facsimile transmission via a communication line, and said inputting means inputs the image data obtained by said image processor through facsimile transmission.

3. The data processor according to claim 2, wherein said creating means assigns as an originator of e-mail the origination information obtained by said image processor through facsimile transmission and creates e-mail format data.

4. The data processor according to claim 3, further comprising registering means for registering information about a plurality of communication parties,
wherein said creating means assigns as the originator of e-mail the information that said image processor obtains by retrieving information registered by said registering means based on address information of the communication party participating in the facsimile transmission and creates e-mail format data.

5. The data processor according to claim 2, wherein said creating means assigns as a title the information indicating the data by facsimile transmission and creates e-mail format data.

6. The data processor according to claim 1, further comprising converting means for converting the format of inputted image data to a predetermined data format,
wherein said adding means adds the image data obtained by said converting means.

7. The data processor according to claim 6, further comprising designating means for designating the data format of image data,
wherein said converting means converts the data format of inputted data to the data format designated by said designating means.

8. The data processor according to claim 1, further comprising setting means for setting the e-mail application to check the presence of the e-mail format data to which image data is added by said adding means.

9. The data processor according to claim 1, wherein said controlling means provides the e-mail format data to which image data is added by said adding means in response to the check from the e-mail application.

10. A data processor, comprising:
inputting means for inputting image data;
monitoring means for monitoring predetermined image data being inputted by said inputting means;
creating means for creating the e-mail format data to which the image data inputted by said inputting means is added, in response to the input of the image data from said inputting means based on the monitoring by said monitoring means; and
sending means for sending to a own station the e-mail format data created by said creating means.

11. The data processor according to claim 10, further comprising connecting means for connecting to the image processor dealing with image data,
wherein said inputting means inputs the image data inputted by the image processor via said connecting means.

12. The data processor according to claim 11, wherein the image processor connected through said connecting means performs facsimile transmission via the communication line, and said inputting means inputs the image data obtained by said image processor through facsimile transmission.

13. The data processor according to claim 12, wherein said creating means assigns as an originator of e-mail the origination information obtained by said image processor through facsimile transmission and creates e-mail format data.

14. The data processor according to claim 13, further comprising registering means for registering information about a plurality of communication parties,
wherein said creating means assigns as the originator of e-mail the information that said image processor obtains by retrieving information registered by said registering means based on address information of the communication party participating in the facsimile transmission and creates e-mail format data.

15. The data processor according to claim 12, wherein said creating means assigns as a title the information indicating the data by facsimile transmission and creates e-mail format data.

16. The data processor according to claim 10, further comprising converting means for converting the format of inputted image data to a predetermined data format,
wherein said adding means adds the image data obtained by said converting means.

17. The data processor according to claim 16, further comprising designating means for designating the data format of image data,
wherein said converting means converts the data format of inputted data to the data format designated by said designating means.

18. A data processing method in a data processing system, said data processing system comprising an image processor dealing with image data and a data processor capturing and processing the image data inputted by the image processor,
wherein said data processing method comprises the steps of:
creating e-mail format data;
adding the image data inputted by the image processor to the created e-mail format data; and
controlling an e-mail application to capture the e-mail format data to which the image data inputted by the image processor is added.

19. A computer readable storage medium, storing a program for controlling a data processing system comprising an image processor dealing with image data and a data processor capturing and processing the image data inputted by the image processor,
wherein said program comprises the steps of:
creating e-mail format data;
adding the image data inputted by the image processor to the created e-mail format data; and
controlling an e-mail application to capture the e-mail format data to which the image data inputted by the image processor is added.

20. A data processing method in a data processing system, said data processing system comprising an image processor dealing with image data and a data processor capturing and processing the image data inputted by the image processor,
wherein said data processing method comprises the steps of:
monitoring predetermined image data being inputted;
creating the e-mail format data to which this inputted image data is added in response to this monitoring; and
sending this created e-mail format data to a own station.

21. A computer readable storage medium, storing a program for controlling a data processing system comprising an image processor dealing with image data and a data processor capturing and processing the image data inputted by the image processor,
wherein said program comprises the steps of:
monitoring predetermined image data being inputted;
creating the e-mail format data to which this inputted image data is added in response to this monitoring; and
sending this created e-mail format data to a own station.

22. An information processor capable of executing an application to send e-mail, comprising:
setting means for setting in a facsimile apparatus a destination for e-mail to be sent by said application;
converting means for converting to facsimile image data the e-mail for which said origination is set in the facsimile apparatus; and
sending means for sending the converted facsimile image data to said facsimile apparatus.

23. The information processor according to claim 22, further comprising a first interface to be connected to a mail server and a second interface to be connected to said facsimile apparatus,
wherein said sending means makes the facsimile apparatus connected via said second interface send said converted facsimile image data to a remote party.

24. The information processor according to claim 22, wherein:
said setting means comprises receiving means for receiving said e-mail from an e-mail managing unit managing the e-mail that is sent by said application, and
instructing means for instructing said sending means to send the e-mail for which the facsimile apparatus is set in said destination; and
said converting means converts the e-mail received by said receiving means to the facsimile image data.

25. The information processor according to claim 24, wherein:
said setting means comprises inputting means for inputting the telephone number of the destination to which data is sent via the set facsimile apparatus in the case where the facsimile apparatus is set in said destination; and
said information processor makes said facsimile apparatus send the facsimile image data to the destination having said inputted telephone number.

26. The information processor according to claim 24, wherein said receiving means, said instructing means, said converting means and said sending means are achieved by the task process of the program executed by said computer.

27. The information processor according to claim 24, further comprising a database consisting of destination names, e-mail addresses, telephone numbers of destinations to which data is sent via said facsimile apparatus, and the priority order of the facsimile apparatus and e-mail,
wherein the database is adapted so that it is possible to refer to the database from said application, the operating system and said converting means.

28. A facsimile system, including an information processor capable of executing an application that sends e-mail to a mail server connected via a first interface and a facsimile apparatus connected to the information processor via a second interface, comprising:
setting means for setting the destination of e-mail to be sent by said application in the facsimile apparatus;
converting means for converting to facsimile image data the e-mail for which said destination is set in the facsimile apparatus; and
sending means for the converted facsimile image data to said facsimile apparatus.

29. A facsimile sending method of sending facsimile image data by an information processor capable of executing an application that sends e-mail, comprising the steps of:
setting the destination of e-mail to be sent by said application in a facsimile apparatus;
converting to facsimile image data the e-mail for which said destination is set in the facsimile apparatus; and
sending the converted facsimile image data to said facsimile apparatus.

30. A storage medium executed by a computer capable of executing an application that sends e-mail, and storing a program to facsimile image data,
wherein said program comprising the processes of:
setting the destination of e-mail to be sent by said application in a facsimile apparatus;
converting to facsimile image data the e-mail for which said destination is set in the facsimile apparatus; and
sending the converted facsimile image data to said facsimile apparatus.

31. A computer terminal having means for managing the sending and receiving of messages using different transmission formats and means for performing interconversion between message formats to facilitate processing of the messages in a common message processing application.

32. An electrical signal carrying processor implementable instructions for controlling a processor to carry out the method of any one of claims 18, 20 and 29.
